# EUROPÄISCHE PATENTSCHRIFT

(11) **EP 0 480 416 B1**
(45) Veröffentlichungstag und Bekanntmachung des Hinweises auf die Patenterteilung: **22.02.1995**
(21) Anmeldenummer: 91117284.9
(22) Anmeldetag: 10.10.1991
(51) Int. Cl.: B24B 55/04, B23Q 3/155

(54) **Schleifmaschine mit einem Magazin zur Aufnahme von Schleifscheiben**
Grinding machine with magazine for the storage of grinding wheels
Rectifieuse avec magasin pour le stockage de meules

(30) Priorität: 12.10.1990 IT 2174190
(43) Veröffentlichungstag der Anmeldung: 15.04.1992
(73) Patentinhaber: GERARDI S.p.A., I-21017 Samarate (Varese) (IT)
(72) Erfinder: Merlino, Ezio, Montafia (IT); Gerardi, Ivano, Busto Arsizio (IT)
(74) Vertreter: Mayer, Hans Benno, Dipl.-Ing.

(56) Entgegenhaltungen:
- DE-A- 3 419 569
- DE-B- 3 021 065
- DE-U- 8 518 963
- PATENT ABSTRACTS OF JAPAN vol. 10, no. 163 (M-487)(2219) 11. Juni 1986 & JP-A-61 014 831 (SUMITOMO JUKIKAI KIGYO K.K.) 23 Januar 1986

## Beschreibung

Die vorstehende Erfindung betrifft eine Schleifmaschine, die mit einem Magazin zur Aufnahme verschiedener Schleifscheiben ausgeruestet ist.

Um fuer den Bedienungsmann einer Schleifmaschine Schutz gegen fliegende Splitter und Bruchteile einer Schleifscheibe, bei Bruch der verwendeten Schleifscheibe zu gewaehrleisten, ist es bekannt, die eingesetzte Schleifscheibe in einer Schutzhaube unterzubringen, die mit dem Kopf der Schleifmaschine verbunden ist. Die beste Schutzwirkung wird dann erreicht, wenn zwischen den Flaechen der Schleifscheibe und den Waenden der Schutzhaube ein moeglichst kleiner Freiraum bestehen bleibt.

Es ist bereits eine Schutzhaube fuer Schleifscheiben bekannt geworden, die aus einem tassenfoermigen Bauteil besteht, das mit dem Schleifkopf verbunden ist und einen beweglichen Deckel aufweist. Dieser Deckel ist in Fuehrungsnuten einsetzbar, die im tassenfoermigen Koerper der Schutzhaube vorgesehen sind. In diesen Fuehrungen kann der Schutzdeckel unter Verwendung von Schrauben festgespannt werden. Die tassenfoermig ausgebildete Schutzhaube ist so bemessen, dass in der Haube eine Schleifscheibe mit groesserer Dickenabmessung angeordnet werden kann. Bei Verwendung von Schleifscheiben mit kleinerer Dickenabmessung nimmt folglich der Zwischenraum zwischen den Seitenflaechen der Schleifscheibe und der Schutzhaube zu, wodurch die Schutzwirkung der bekannten Haube entsprechend abnimmt.

Es ist Aufgabe der vorstehenden Erfindung, eine Schleifmaschine vorzuschlagen, die mit einer Vorrichtung zum automatischen Auswechseln der Schutzhauben der Schleifscheibe ausgeruestet ist, wobei es moeglich sein soll, automatisch am Kopf der Schleifmaschine von Fall zu Fall eine Schutzhaube anzubringen, deren Abmessungen an die Abmessungen der verwendeten Schleifscheibe angepasst sind.

Erfindungsgemaess wird diese Aufgabe bei einer Schleifmaschine mit einem Magazin zur Aufnahme der Schleifscheiben dadurch geloest, dass ein weiteres Magazin fuer die Aufnahme einer Vielzahl von Schutzhauben vorgesehen ist und diese Schutzhauben mit dem Schleifkopf der Werkzeugmaschine verbindbar sind, dass ferner Mittel zum Foerdern der Schutzhauben vom Magazin der Hauben zum Kopf der Schleifmaschinen und umgekehrt vorgesehen sind und des weiteren Mittel zum Befestigen der Schutzhaube am Kopf der Schleifmaschine vorgesehen sind, und dass die Mittel fuer den Transport der Schutzhauben und die Mittel zum Befestigen der Haube am Kopf der Schleifmaschine, mit der Steuereinrichtung der Schleifmaschine wirkverbunden sind.

Bei der Erfindung wird eine einfache Bauweise der Vorrichtung mit kompakten Abmessungen, sowie eine einfache Lagerung der Schutzhaube dadurch erreicht, dass das Magazin zur Aufnahme der Schutzhauben aus einer Vielzahl von uebereinander angeordneten Armen besteht, die um eine vertikale Achse schwenkbar gelagert sind und jeder Arm eine Abdeckhaube aufnimmt.

Es wird eine einfache Ausfuehrungsform des Magazins zur Aufnahme der Schutzhauben gegenueber der Schleifmaschine sowie eine genaue Festlegung der Ruhelage sowie der Montagelage fuer die Abdeckhaube dadurch erreicht, dass die uebereinander angeordneten und schwenkbar gelagerten Arme vom Gestell der Schleifmaschine aufgenommen werden.

Man erreicht eine genaue Lageanordnung der Schutzhauben auf den schwenkbar vorgesehenen Armen dadurch, dass in die untere Wand der Schutzhauben Ausnehmungen eingearbeitet sind, die mit Stiften zur Lagesicherung der Haube in Wirkverbindung bringbar sind.

Es wird eine einfache Verbindung zwischen dem Kopf der Schleifmaschine und der einzusetzenden Abdeckhaube, sowie eine feste Verspannung der Abdeckhaube am Kopf der Schleifmaschine dadurch erreicht, dass die Oberseite der Abdeckhaube eine Aufnahme fuer eine Halteplatte aufweist, die am Kopf der Schleifmaschine angeordnet ist und Aufnahmen fuer steuerbare Spannmittel im Kopfes der Schleifmaschine aufweist.

Man erreicht eine platzsparende Bauweise des Kopfes der Schleifmaschine und erzielt ein sicheres Festlegen der Schutzhaube am Kopf der Schleifmaschine dadurch, dass die Befestigungsmittel am Kopf der Schleifmaschine aus einer Vielzahl von Kolben-Zylindereinheiten bestehen, deren beweglich angeordnete Stangen mit Ausnehmungen, die an der Oberseite der Abdeckhaube vorgesehen sind in Wirkverbindung treten. Eine Verringerung des Fertigungsaufwandes sowie eine Verminderung der notwendigen Bauteile wird dadurch erzielt, dass die Zylinder fuer die Aufnahme der Spannkolben in den Koerper des Kopfes der Schleifmaschine eingearbeitet sind.

Waehrend des Schleifvorganges wird eine zuverlaessige Lagerung der Schutzhaube auch bei Stoerungen im Hydraulickreislauf der Werkzeugmaschine dadurch erreicht, dass die Kolben-Zylindereinheiten im Kopf der Schleifmaschine als einfachwirkende Zylinder ausgebildet sind und die Kolben in einer Bewegungsrichtung durch Federmittel beaufschlagt werden.

Die mit der Erfindung erzielbaren Vorteile bestehen hauptsaechlich darin, dass der Leistungsgrad der Schleifmaschine erhoeht wird und waehrend der Bearbeitung des Werkstueckes maximaler Schutz gegen Verletzungen fuer den Bedienungsmann gegeben ist. Die Kombination zwischen der verwendeten Schleifscheibe mit einer passenden Schutzhaube wird automatisch von der NC-Steuereinrichtung der Schleifmaschine ueberwacht. Die NC-Einrichtung steuert ferner den Ablauf der einzelnen Bewegungsvorgaenge waehrend des Austauschens der Schutzhauben.

Die Kolben-Zylindereinheiten fuer das Halten der Schutzhaube am Kopf der Schleifmaschine koennen ueber das Hydrauliksystem der Schleifmaschine mit Druckfluessigkeit beaufschlagt werden. Die Verwendung der einfach wirkenden Kolben-Zylindereinheiten, bei denen der eigentliche Spannvorgang durch vorgespannte Federmittel erfolgt, garantiert eine sichere Befestigung der Schutzhaube am Kopf der Schleifmaschine, dies auch bei Stoerungen im Hydraulikkreislauf der Maschine.

Ein Ausfuehrungsbeispiel der Erfindung ist schematisch in den Zeichnungen dargestellt und wird im Anschluss genauer beschrieben werden. In den Zeichnungen zeigen:
Fig. 1 eine teilweise Draufsicht auf die erfindungsgemaesse Vorrichtung, sowie auf das Magazin zur Aufnahme der Schleifscheiben fuer eine Schleifmaschine;
Fig. 2 eine Seitenansicht des Aufnahmemagazins fuer die Schleifscheiben, betrachtet in Richtung des Pfeiles f der Figur 1;

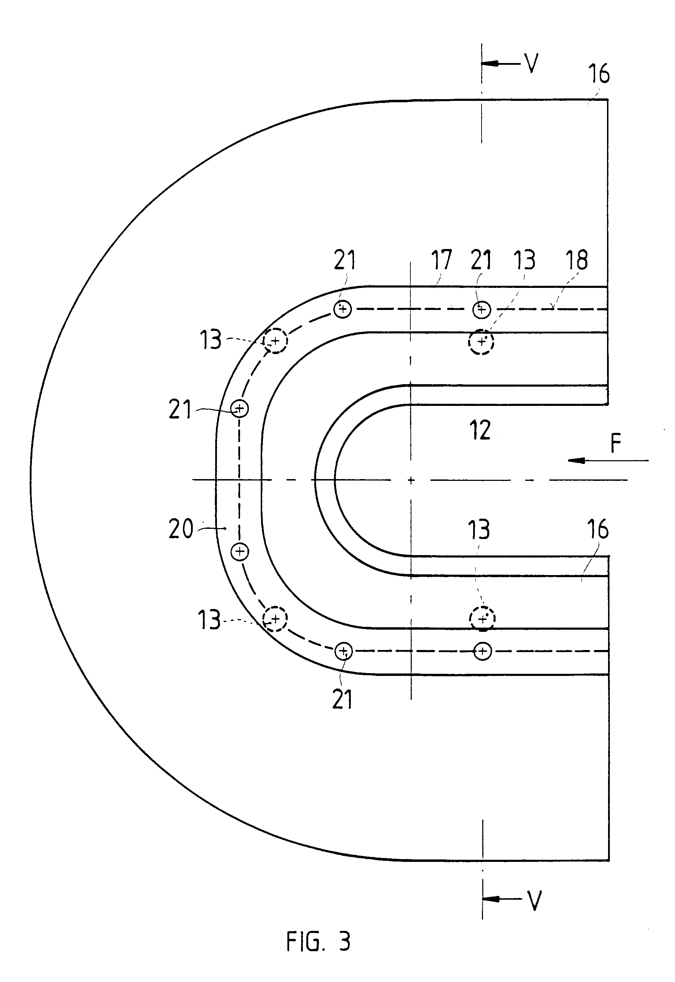

Fig. 3 eine Draufsicht auf eine erfindungsgemaesse Schutzhaube;

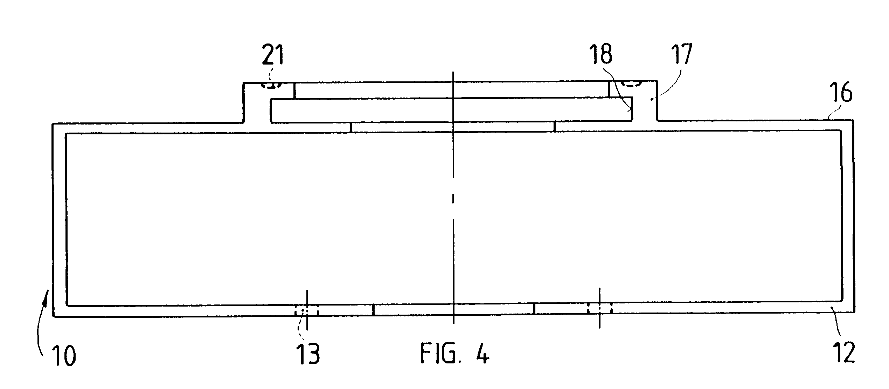

Fig. 4 eine Vorderansicht nach Fig. 3, mit Blick in Richtung des Pfeiles F; und

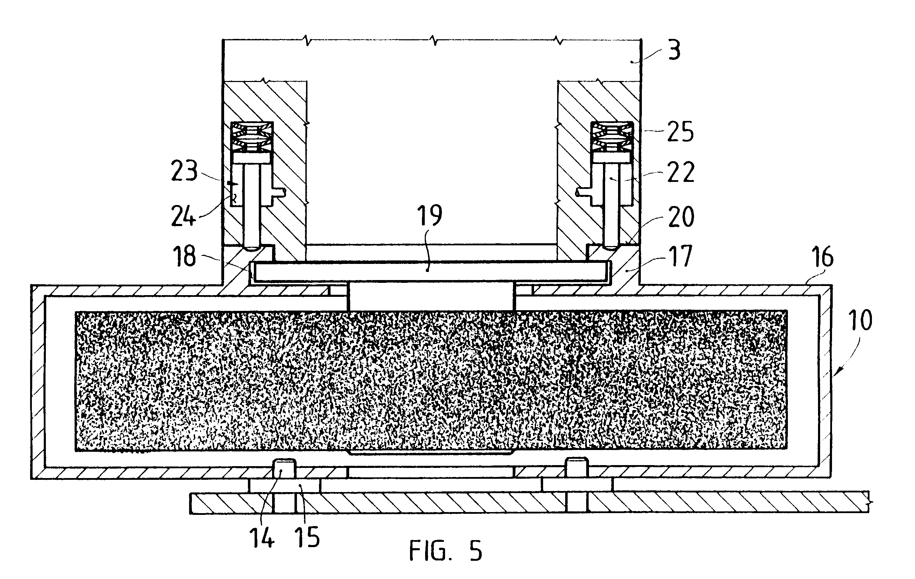

Fig. 5 einen Schnitt entlang der Linie V-V der Fig. 3 mit Schleifscheibe sowie Kopf der Schleifmaschine.

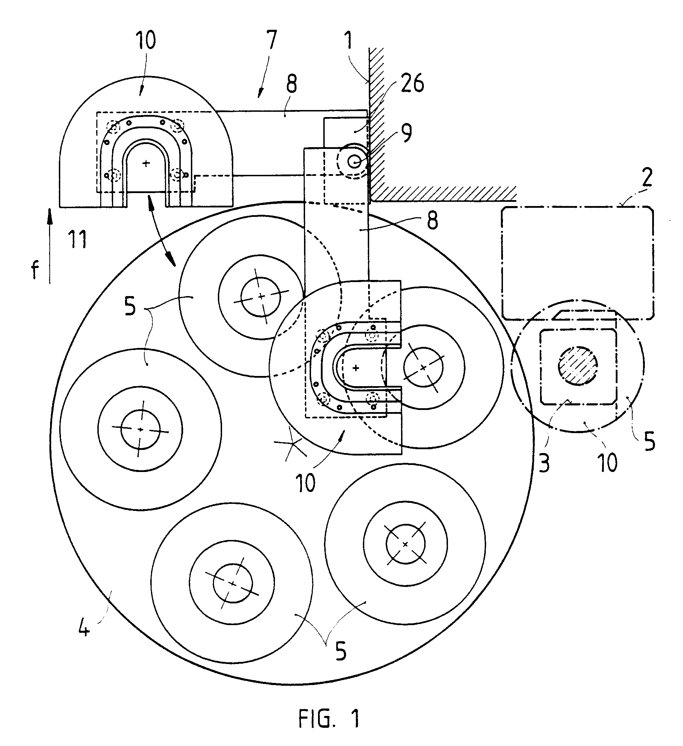

In Fig. 1 ist schematisch der Staender 1 einer Flachschleifmaschine dargestellt. Die Maschine weist einen Wagen 2 auf, der in bekannter Weise den Schleifkopf 3 aufnimmt. Des weiteren ist die Werkzeugmaschine mit einem Magazin 4 zur Aufnahme verschieden grosser Schleifscheiben 5 ausgeruestet. Die NC-Steuereinrichtung der Schleifmaschine steuert in bekannter Weise auch die Bewegungsablaeufe fuer den Austausch der Schleifscheiben.

Die Vorrichtung 7 fuer den automatischen Austausch der Schutzhauben 10 bildet ein Magazin 7 fuer die Aufnahme verschiedener Schutzhauben. Im dargestellten Beispiel besteht das Magazin 7 aus einer Vielzahl schwenkbar angeordneter Arme 8. Die Arme 8 sind uebereinander angeordnet und um eine Vertikalachse 9 verschwenkbar. Die Arme 8 sind mit einer steuerbaren Schwenkeinrichtung 26, z.B. steuerbaren hydraulischen Kolben-Zylindereinheiten, Zahnstangen und aehnlichen Mitteln ausgeruestet. Die Schwenkeinrichtung wird von der NC-Steuereinrichtung der Schleifmaschine ueberwacht. Im dargestellten Ausfuehrungsbeispiel ist das Magazin 7 am Staender 1 der Werkzeugmaschine, in der Naehe der Einrichtung 4 fuer die Aufnahme der Schleifscheiben angeordnet. Die Anzahl der Arme 8 entspricht der Anzahl der im Magazin 7 angeordneten Schutzhauben.

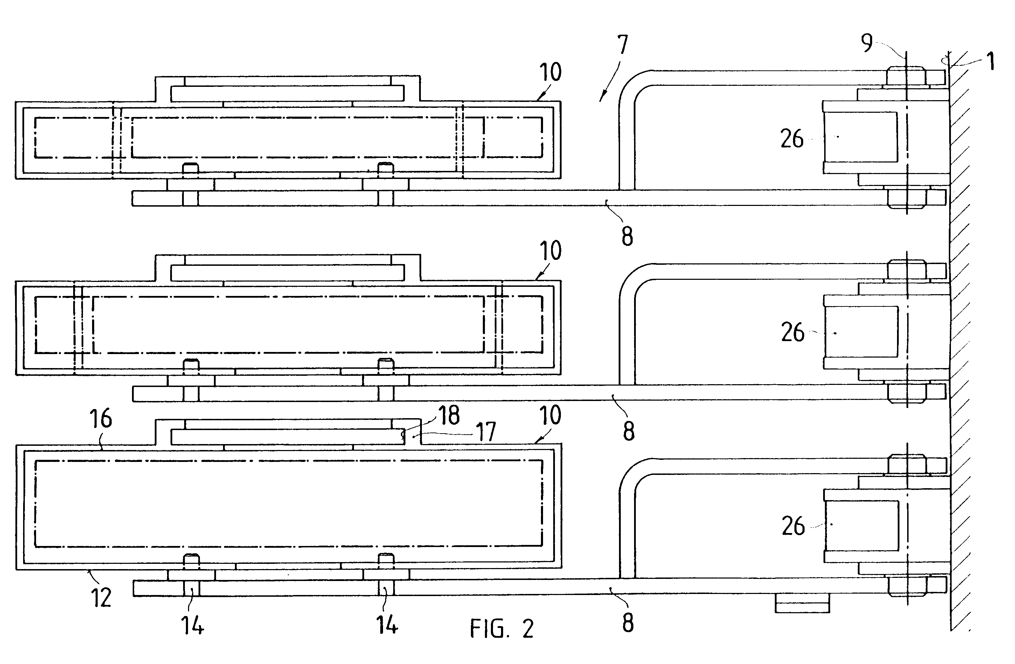

In Fig. 2 sind lediglich drei Arme 8 dargestellt, selbstverstaendlich kann das Magazin 7 auch eine groessere Anzahl an Armen 8 aufweisen. Jeder Arm 8 traegt an seinem freien Ende eine Schutzhaube 10. Erfindungsgemaess weisen die Schutzhauben 10 die Gestalt von geschlossenen Koerpern auf, die lediglich an ihrer Vorderseite 11 offen ausgebildet sind. In vorteilhafter Weise sind die Schutzhauben 10 als einstueckige Koerper 8 ausgebildet. Die untere Wand 12 der Schutzhauben 10, die auf die Arme 8 zu gerichtet ist, weist Ausnehmungen 13 auf, die mit Stiften 14 verbindbar sind, die von den Armen 8 abstehen. Im dargestellten Ausfuehrungsbeispiel sind vier Ausnehmungen 13 in die Wand 12 eingearbeitet. Die Stifte 14 zur Lagesicherung der Haube 10 wirken mit Abstandsscheiben 15 zusammen. Die Schutzhauben 10 weisen im oberen Deckel 16, d.h. in der auf den Schleifkopf 3 zu gerichten Wand eine Verdickung 17 nach Art eines Hufeisens auf. In diese Wandverdickung 17 ist eine Nut 18 eingearbeitet, die mit einer Lagerplatte 19, die mit dem Schleifkopf 3 verbunden ist, zusammenfuegbar. In die obere Flaeche 20 der Verdickung 17 sind Ausnehmungen 21 eingearbeitet. Mit diesen Ausnehmungen 21 koennen die Stangen 22 der kleinen Kolben 23 in Wirkverbindung treten. Im dargestellten Ausfuehrungsbeispiel sind die Zylinder 24 direkt in den Koerper des Schleifkopfes 3 eingearbeitet. Mit dem Bezugszeichen 25 sind vorgespannte Federmittel gekennzeichnet, die die Kolbenstangen 22 in einer Bewegungsrichtung beaufschlagen. Die freien Enden der Kolbenstangen stehen vom Koerper des Schleifkopfes 3 ab.

Die Arbeitsweise der erfindungsgemassen Vorrichtung ist folgende:
Zum Austausch einer Schleifscheibe sowie der dazugehoerenden Schutzhaube wird der Schleifkopf 3 in vertikaler Lage angeordnet und derartig verschoben, dass sich der Schleifkopf ueber dem Magazin 4 der Schleifscheiben 5 befindet.

Ein Arm 8, der die passende Schutzhaube 10 traegt und am Staender der Maschine angeordnet ist, wird von seiner Ruhelage ausserhalb des Magazins 4 fuer die Schleifscheiben in seine Arbeitsstellung zur Durchfuehrung eines Haubenwechsels (Fig. 1) verschwenkt.

In dieser Lage wird den Kolben-Zylindereinheiten 23 Hydraulikoel zugefuehrt. Es erfolgt ein Komprimieren der Federn 25 und ein Austreten der Kolbenstangen 22 aus den Ausnehmungen 21 der Schutzhaube. Die Schutzhaube 10 wird ueber den Arm 8 nach unten bewegt, bis die Stifte 14 in die durchgehenden Ausnehmungen 13 einfahren. Der Arm 8 wird im Anschluss mit der Haube nach aussen geschwenkt, wodurch die Schutzhaube 10 vom Schleifkopf 3 geloest wird. Anschliessend erfolgt in bekannter Weise das Auswechseln der Schleifscheibe. Die zur neuen nunmehr am Schleifkopf 3 montierten Schleifscheibe 5 passende Schutzhaube 10 wird ueber dem Scheibenmagazin durch Verschwenken des zugeordneten Armes 8 angefoerdert. Am Ende dieser Schwenkbewegung wird die Schutzhaube 10 ueber die Ausnehmung 18 mit der Aufnahmeplatte 19 des Schleifkopfes 3 verbunden. Es erfolgt ein Abfluss des Druckoels aus den Kolben-Zylindereinheiten 23 und ueber die Federmittel 25 erfolgt das Einfahren der Kolbenstangen 22 in die Ausnehmungen 21 der Haube, wodurch die Schutzhaube in ihrer Arbeitslage festgelegt wird. Es erfolgt somit ein Befestigen der Schutzhaube 10 am Schleifkopf 3. Im Anschluss daran wird der Schleifkopf 3 nach oben verfahren. Dies fuehrt zu einem Abloesen der Schutzhaube 10 von den Positionierstiften 14 des Armes 8. Der Arm 8 wird im Anschluss nach rueckwaerts in seine Ruhelage verschwenkt, schwenkt, wodurch der Schleifkopf 3 seinen Bearbeitungsvorgang beginnen kann. Die Reihenfolge der Steuerbefehle fuer das Auswechseln der Schutzhaube ist automatisch ueber die NC-Steuereinrichtung der Schleifmaschine kontrollierbar.

In der Praxis waere es auch moeglich, andersartig aufgebaute Magazine fuer die Aufnahme der verschiedenen Schutzhauben vorzusehen, z.B. in Form von drehbar angeordneten Scheibenmagazinen, die die Schutzhauben lagern.

Auch die Mittel zum Befestigen der Schutzhaube am Kopf der Schleifmaschine koennten unterschiedlich von der dargestellten Ausfuehrungsform sein. So koennten z.B. die Kolben-Zylindereinheiten auch an der Aussenseite des Schleifkopfes vorgesehen werden.

## Patentansprüche

1. Schleifmaschine, mit einem Magazin (4) fuer die Aufnahme von Schleifscheiben (5), **dadurch gekennzeichnet**, dass ein weiteres Magazin (7) fuer die Aufnahme einer Vielzahl von Schutzhauben (10) vorgesehen sind und diese Schutzhauben (10) mit dem Kopf (3) der Schleifmaschine verbindbar sind (17,18,19), dass ferner Einrichtungen (8,26) zum Foerdern der Schutzhauben vom Magazin (7) der Hauben (10) zum Kopf (3) der Schleifmaschine und umgekehrt vorgesehen sind und des weiteren Mittel (23,22,21) zum Befestigen der Schutzhauben (10) am Kopf (3) der Schleifmaschine vorgesehen sind und dass die Mittel (8,26) fuer den Transport der Schutzhauben (10) und die Einrichtungen (23,22,21) zum Befestigen der Hauben (10) am Kopf (3) der Schleifmaschine mit der Steuereinrichtung der Schleifmaschine wirkverbunden sind.

2. Schleifmaschine, nach Patentanspruch 1, **dadurch gekennzeichnet**, dass das Magazin (7) fuer die Aufnahme der Schutzhauben (10) aus einer Vielzahl von uebereinander angeordneten Armen (8) bestehen, die um eine Vertikalachse (9) verschwenkbar angeordnet sind und dass jeder Arm (8) eine Schutzhaube (10) aufnimmt.

3. Schleifmaschine, nach Patentanspruch 1 und 2**, dadurch gekennzeichnet**, dass die uebereinander angeordneten und um eine Vertikalachse (9) verschwenkbar angeordneten Arme (8) am Gestell der Werkzeugmaschine befestigt sind.

4. Schleifmaschine, nach Patentanspruch 1, **dadurch gekennzeichnet,** dass die Schutzhauben (10) eine gehaeuseartige Form aufweisen und an ihrer Vorderseite offen ausgebildet sind.

5. Schleifmaschine, nach Patentanspruch 4, **dadurch gekennzeichnet,** dass die Schutzhaube (10) an ihrer Unterseite (12) Ausnehmungen (13) aufweist, mit denen Positionierstifte (14), die von den schwenkbar angeordneten Armen (8) abstehen, in Wirkverbindung bringbar sind.

6. Schleifmaschine, nach Patentanspruch 1 und 4, **dadurch gekennzeichnet,** dass an der Oberseite (16) der Schutzhaube (10) eine Ausnehmung (18) fuer die Aufnahme einer Halteplatte (19) vorgesehen ist und diese Halteplatte (19) mit dem Kopf (3) der Schleifmaschine verbunden ist und Ausnehmungen (21) zur Aufnahme steuerbarer Spannstifte (22) des Kopfes (3) der Werkzeugmaschine aufweist.

7. Schleifmaschine, nach Patentanspruch 1 und 6, **dadurch gekennzeichnet,** dass die Spannmittel (22) des Schleifkopfes (3) aus einer Vielzahl von Kolben-Zylindereinheiten (23) bestehen, deren Stifte (22) mit Ausnehmungen (21) im Deckel der Schutzhaube (10) in Wirkverbindung treten.

8. Schleifmaschine, nach Patentanspruch 1 und 7, **dadurch gekennzeichnet,** dass die Kolben-Zylindereinheiten (23) des Schleifkopfes (3) in den Koerper des Schleifkopfes (3) eingearbeitet sind.

9. Schleifmaschine, nach Patentanspruch 7, **dadurch gekennzeichnet,** dass die Kolben-Zylindereinheiten (23) als einfach wirkende Zylinder ausgebildet sind und die Stangen (22) durch Federmittel (25) beaufschlagt sind.

## Claims

1. Grinding machine having a magazine (4) for accommodating grinding wheels (5), characterized in that a further magazine (7) is provided for accommodating a multiplicity of wheel guards (10) and these wheel guards (10) can be connected (17, 18, 19) to the head (3) of the grinding machine, in that, furthermore, devices (8, 26) are provided for conveying the wheel guards from the magazine (7) of the wheel guards (10) to the head (3) of the grinding machine and vice versa and, in addition, means (23, 22, 21) are provided for fastening the wheel guards (10) to the head (3) of the grinding machine, and in that the devices (8, 26) for the transport of the wheel guards (10) and the means (23, 22, 21) for fastening the wheel guards (10) to the head (3) of the grinding machine are operatively connected to the control device of the grinding machine.

2. Grinding machine according to Claim 1, characterized in that the magazine (7) for accommodating the wheel guards (10) consists of a multiplicity of arms (8) which are arranged one above the other and so as to be pivotable about a vertical axis (9), and in that each arm (8) accommodates a wheel guard (10).

3. Grinding machine according to Claims 1 and 2, characterized in that the arms (8) arranged one above the other and so as to be pivotable about a vertical axis (9) are fastened to the frame of the machine tool.

4. Grinding machine according to Claim 1, characterized in that the wheel guards (10) have a housing-like form and are designed to be open at their front side.

5. Grinding machine according to Claim 4, characterized in that the wheel guard (10) has at its underside (12) recesses (13) with which positioning pins (14) projecting from the pivotably arranged arms (8) can be brought into operative connection.

6. Grinding machine according to Claims 1 and 4, characterized in that a recess (18) for accommodating a retaining plate (19) is provided at the top side (16) of the wheel guard (10), and this retaining plate (19) is connected to the head (3) of the grinding machine and has recesses (21) for accommodating controllable clamping pins (22) of the head (3) of the machine tool.

7. Grinding machine according to Claims 1 and 6, characterized in that the clamping means (22) of the grinding head (3) consist of a multiplicity of piston/cylinder units (23), the pins (22) of which come into operative connection with recesses (21) in the cover of the wheel guard (10).

8. Grinding machine according to Claims 1 and 7, characterized in that the piston/cylinder units (23) of the grinding head (3) are made in the body of the grinding head (3).

9. Grinding machine according to Claim 7, characterized in that the piston/cylinder units (23) are designed as single-acting cylinders and the rods (22) are acted upon by spring means (25).

## Revendications

1. Rectifieuse munie d'un magasin (4) pour recevoir des meules (5), caractérisée en ce qu' il est prévu un second magasin (7) pour recevoir une multiplicité de capots de protection (10) et en ce que les capots de protection (10) sont apte à être reliés (17,18,19) avec la tête (3) de la rectifieuse, en ce qu'ils sont également prévus des dispositifs (8,26) pour transporter les capots de protection (10) du magasin (7) à la tête (3) da la rectifieuse et vice versa et en outre des moyens (23,22,21) pour fixer les capots de protection (10) à la tête (3) da la rectifieuse et en ce que les dispositifs (8,26) pour transporter les capots de protection (10) et les moyens (23,22,21) pour fixer les capots de protection (10) à la tête (3) da la rectifieuse coopèrent avec le dispositif de commande de la rectifieuse.

2. Rectifieuse selon la revendication 1, caractérisée en ce que le magasin (7) pour recevoir les capots de protection (10) est constitué d'une multiplicité de bras arrangés les uns sur les autres et mobiles autour d'un axe vertical (9) et en ce que chaque bras (8) reçoit un capot de protection (10).

3. Rectifieuse selon la revendication 1 et 2, caractérisée en ce que les bras arrangés les uns sur les autres et mobiles autour d'un axe vertical (9) sont attachés au chassis de la rectifieuse.

4. Rectifieuse selon la revendication 1, caractérisée en ce que les capots de protection (10) possèdent une forme de boîtier et se présentent ouvert à la face frontale.

5. Rectifieuse selon la revendication 4, caractérisée en ce que le capot de protection (10) présente des creux (13) au dessous (12), les creux (13) étant capables d'être mis en coopération avec des broches de positionnement (14) écartées des bras mobiles (8).

6. Rectifieuse selon la revendication 1 et 4, caractérisée en ce qu'à la face supérieure (16) du capot de protection (10) est prévu un creux (18) pour recevoir une plaque de support (19) et en ce que cette plaque de support (19) est reliée à la tête (3) de la rectifieuse et en ce que la face supérieure (16) comporte des creux (21) pour recevoir des moyens de serrage (22) de la tête (3) de la rectifieuse commandées.

7. Rectifieuse selon la revendication 1 et 6, caractérisée en ce que les moyens de serrage (22) de la tête de meule (3) consistent en une multiplicité de systèmes piston/cylindre (23) dont ses goupilles (22) coopèrent avec des creux (21) dans le couvercle du capot de protection (10).

8. Rectifieuse selon la revendication 1 et 7, caractérisée en ce que les systèmes piston/cylindre (23) de la tête de meule (3) sont intégrés dans le corps de la tête de meule (3).

9. Rectifieuse selon la revendication 7, caractérisée en ce que les systèmes piston/cylindre (23) sont établis en forme de cylindres à action simple et en ce que les goupilles (22) sont soumis à des moyens de ressort (25).
